# EUROPEAN PATENT APPLICATION

(11) **EP 4 512 558 A1**
(43) Date of publication of application: **26.02.2025**
(21) Application number: 24196302.4
(22) Date of filing: 23.08.2024
(51) Int. Cl.: B23H 1/02, B23H 9/14

(54) **MONITORING BREAKTHROUGH OF ELECTRICAL DISCHARGE MACHINING ELECTRODE THROUGH A WORKPIECE**

(30) Priority: 25.08.2023 US 202318238197
(71) Applicant: RTX Corporation, Farmington, CT 06032 (US)
(72) Inventor: DENNEY, Paul E., Northborough, 01532 (US); LUBIN, Andrew H., Weaverville, 28787 (US); PATURZO, Joseph V., Avon, 06001 (US)
(74) Representative: Dehns

(57) **Abstract**

A manufacturing method is provided during which a workpiece (118) is electrical discharge machined using an electrode (120) to form an aperture in the workpiece (118). A first voltage is measured indicative of a gap voltage between the electrode (120) and the workpiece (118) using a first measurement device (138) to provide a first measurement signal indicative of the first voltage. Movement of the electrode (120) is controlled using the first measurement signal. A second voltage is measured indicative of the gap voltage using a second measurement device (144) to provide a second measurement signal indicative of the second voltage. A determination is made whether the electrode (120) has broken through the workpiece (118) using the second measurement signal.

## Description

### BACKGROUND OF THE DISCLOSURE

### 1. Technical Field

This disclosure relates generally to machining and, more particularly, to electrical discharge machining a workpiece.

### 2. Background Information

A gas turbine engine includes various fluid cooled components such as turbine blades and turbine vanes. Such fluid cooled components may include one or more cooling apertures extending through a sidewall of the respective component. Various methods are known in the art for forming cooling apertures, including methods for electrical discharge machining the cooling apertures. While these known cooling aperture formation methods have various benefits, there is still room in the art form improvement.

### SUMMARY OF THE DISCLOSURE

According to an aspect of the present invention, a manufacturing method is provided during which a workpiece is electrical discharge machined using an electrode to form an aperture in the workpiece. A first voltage is measured indicative of a gap voltage between the electrode and the workpiece using a first measurement device to provide a first measurement signal indicative of the first voltage. Movement of the electrode is controlled using the first measurement signal. A second voltage is measured indicative of the gap voltage using a second measurement device to provide a second measurement signal indicative of the second voltage. A determination is made whether the electrode has broken through the workpiece using the second measurement signal.

According to another aspect of the present invention, another manufacturing method is provided during which a workpiece is electrical discharge machined using an electrode to form an aperture in the workpiece. The workpiece extends between a face surface and a back surface. The electrical discharge machining includes plunging the electrode into the workpiece through the face surface. An EDM voltage is measured indicative of a gap voltage between the electrode and the workpiece using a high frequency measurement device to provide an EDM voltage measurement signal indicative of the EDM voltage. The EDM voltage is measured by the high frequency measurement device at a measurement frequency equal to or greater than ten kilohertz. A determination is made whether the electrode has broken through the back surface using the EDM voltage measurement signal.

According to still another aspect of the present invention, another manufacturing method is provided during which a workpiece is electrical discharge machined using an electrode to form an aperture in the workpiece. The workpiece extends between a face surface and a back surface. The workpiece is secured to a support by a fixture. The electrical discharge machining includes plunging the electrode into the workpiece through the face surface. The electrode is supported by and electrically coupled to a guide. A measurement voltage is measured between the guide and the fixture indicative of a gap voltage between the electrode and the workpiece using a measurement device to provide a measurement signal indicative of the measurement voltage. The measurement device is electrically coupled to the guide and the fixture. A determination is made whether the electrode has broken through the back surface using the measurement signal.

Optionally, and in accordance with any of the above, the manufacturing method may also include: measuring an EDM system voltage indicative of the gap voltage using a low frequency measurement device to provide an EDM system voltage measurement signal indicative of the gap voltage, wherein the EDM system voltage may be measured by the low frequency measurement device at a measurement frequency equal to or less than five-hundred hertz; and controlling movement of the electrode using the EDM system measurement signal.

Optionally, and in accordance with any of the above, the determining of whether the electrode has broken through the back surface may be performed during the electrical discharge machining. The electrical discharge machining may be terminated when it is determined that the electrode has completely broken through the back surface.

Optionally, and in accordance with any of the above, the first voltage may be measured using the first measurement device at a measurement frequency equal to or less than five-hundred hertz.

Optionally, and in accordance with any of the above, the workpiece may be secured to a support by a fixture. A first line may electrically couple a power source to the electrode. A second line may electrically couple the power source to the support. The first measurement device may be electrically coupled to the first line and the second line. The first voltage may be measured between the first line and the second line.

Optionally, and in accordance with any of the above, the second voltage may be measured using the second measurement device at a measurement frequency equal to or greater than ten kilohertz.

Optionally, and in accordance with any of the above, the electrical discharge machining may use an electrical current with a pulse width equal to or less than twenty microseconds.

Optionally, and in accordance with any of the above, the workpiece may be secured to a support by a fixture. The electrode may be supported by a guide. The second measurement device may be electrically coupled to the fixture and the guide. The second voltage may be measured between the fixture and the guide.

Optionally, and in accordance with any of the above, a first line may electrically couple a power source to the guide. A second line may electrically couple the power source to the support.

Optionally, and in accordance with any of the above, the workpiece may extend between a face surface and a back surface. The electrical discharge machining may include plunging the electrode into the workpiece through the face surface towards the back surface. The electrode may be angularly offset from the back surface by an acute angle.

Optionally, and in accordance with any of the above, the manufacturing method may also include detecting an initial breakthrough of a corner of the electrode through the back surface using the second measurement signal.

Optionally, and in accordance with any of the above, the manufacturing method may also include detecting a complete breakthrough of a tip of the electrode through the back surface using the second measurement signal.

Optionally, and in accordance with any of the above, the determining of whether the electrode has broken through the workpiece may be performed during the electrical discharge machining. The electrical discharge machining may be terminated when it is determined that the electrode has broken through the workpiece.

Optionally, and in accordance with any of the above, the determining of whether the electrode has broken through the workpiece may be performed after the electrical discharge machining. The electrical discharge machining may be repeated when it is determined that the electrode did not break through the workpiece.

Optionally, and in accordance with any of the above, the manufacturing method may also include comparing breakthrough information obtained using the second measurement signal to breakthrough information obtained using another breakthrough determination method.

Optionally, and in accordance with any of the above, the workpiece may be configured as or otherwise include a turbine engine airfoil.

Optionally, and in accordance with any of the above, the manufacturing method may also include forming a component of a turbine engine. The forming of the component may include the electrical discharge machining of the workpiece to form the aperture. A cooling hole in the component may be configured from or otherwise include the aperture.

Optionally, and in accordance with any of the above, the cooling hole may include a meter (or 'metering') section and a diffuser section. The aperture may form at least the meter section.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared turbofan turbine engine.
FIG. 2 is an illustration of a portion of a fluid cooled component.
FIG. 3 is a sectional illustration of a portion of the fluid cooled component taken along line 3-3 in FIG. 2.
FIG. 4 is a sectional illustration of a portion of the fluid cooled component with another cooling aperture arrangement.
FIG. 5 is a flow diagram of a method for manufacturing a component.
FIG. 6 is a schematic illustration of a manufacturing system for forming an aperture in a workpiece.
FIG. 7 is a sectional illustration of a portion of a workpiece.
FIGS. 8A-C are sectional illustrations of a portion of the workpiece at various stages of aperture formation.
FIGS. 9A and 9B are sectional illustrations of a portion of the workpiece coated with a coating system at various stages of cooling aperture formation.
FIG. 10 is a sectional illustration of a portion of the workpiece including the coating system.

### DETAILED DESCRIPTION

The present disclosure includes methods for manufacturing a component such as a fluid cooled component of a gas turbine engine. The term "manufacturing" may describe a process for original manufacturing the component; e.g., creating a brand new component. The term "manufacturing" may also or alternatively describe a process for remanufacturing or otherwise repairing the component; e.g., restoring one or more features of a previously formed component to brand new condition, similar to brand new condition, better than brand new condition, etc. The component, for example, may be repaired to fix one or more defects (e.g., cracks, wear and/or other damage) imparted during previous use of the component. The component may also or alternatively be repaired to fix one or more defects imparted during the initial formation of the component.

For ease of description, the turbine engine may be described below as a turbofan turbine engine. The present disclosure, however, is not limited to such an exemplary gas turbine engine. The turbine engine, for example, may alternatively be configured as a turbojet turbine engine, a turboprop turbine engine, a turboshaft turbine engine, a propfan turbine engine, a pusher fan turbine engine or an auxiliary power unit (APU) turbine engine. The turbine engine may be configured as a geared turbine engine or a direct drive turbine engine. The present disclosure is also not limited to aircraft applications. The turbine engine, for example, may alternatively be configured as a ground-based industrial turbine engine for power generation, or any other type of turbine engine which utilizes fluid cooled components.

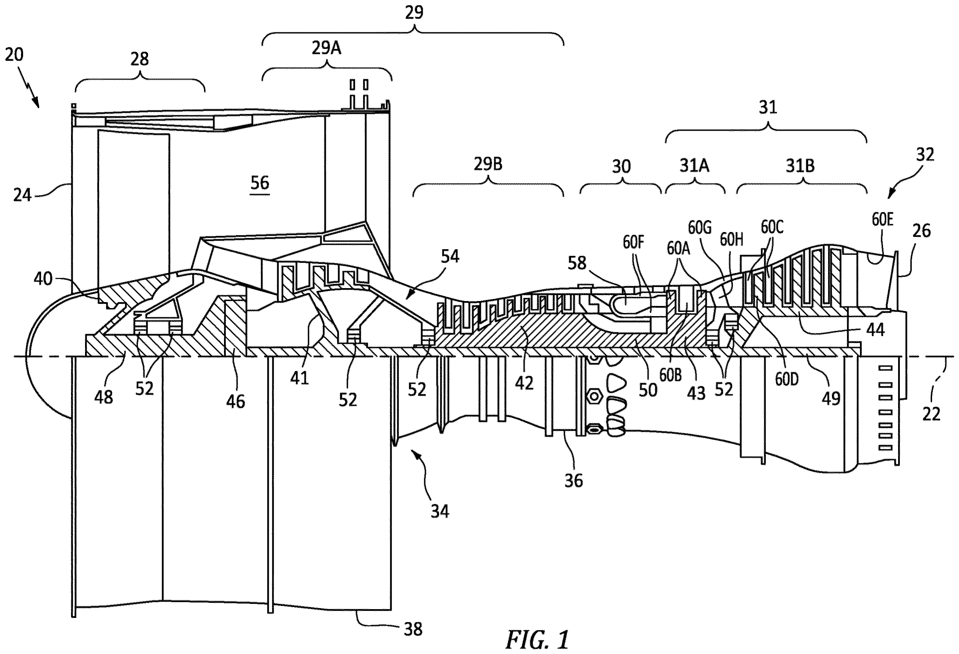

FIG. 1 is a side cutaway illustration of the turbofan turbine engine 20. This turbine engine 20 extends along an axial centerline 22 between a forward, upstream airflow inlet 24 and an aft, downstream combustion products exhaust 26. The turbine engine 20 includes a fan section 28, a compressor section 29, a combustor section 30, a turbine section 31 and an exhaust section 32 (partially shown in FIG. 1). The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B of FIG. 1 are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A-31B; e.g., a core of the turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52; e.g., rolling element and/or thrust bearings. Each of these bearings 52 is connected to the engine housing 34 by at least one stationary structure such as, for example, an annular support frame.

During operation, air enters the turbine engine 20 through the airflow inlet 24. This air is directed through the fan section 28 and into a core flowpath 54 and a bypass flowpath 56. The core flowpath 54 extends sequentially through the engine sections 29A-32; e.g., the engine core. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40, which propels the bypass air through and out of the bypass flowpath 56. The propulsion of the bypass air may account for a majority of thrust generated by the turbine engine 20; e.g., more than seventy-five percent (75%) of engine thrust. The turbine engine 20 of the present disclosure, however, is not limited to the foregoing exemplary thrust ratio.

The turbine engine 20 includes a plurality of fluid cooled components (e.g., 60A-H; generally referred to as "60") arranged within, for example, the combustor section 30, the turbine section 31 and/or the exhaust section 32. Examples of these fluid cooled components 60 include airfoils such as, but not limited to, a rotor blade airfoil (e.g., 60A, 60D) and a stator vane airfoil (e.g., 60B, 60C, 60H). Other examples of the fluid cooled components 60 include flowpath walls such as, but not limited to, a combustor liner (e.g., 60F), an exhaust duct liner (e.g., 60E), a shroud or other flowpath wall (e.g., 60G), a rotor blade platform, a stator vane platform, and the like. Of course, various other fluid cooled components may be included in the turbine engine 20, and the present disclosure is not limited to any particular types or configurations thereof.

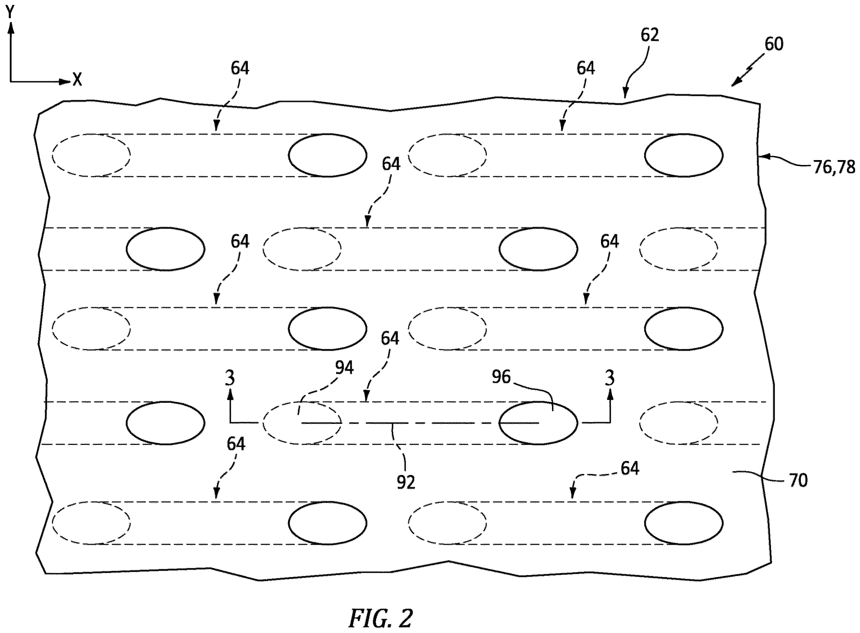

FIG. 2 illustrates a portion of one of the fluid cooled components 60 within the turbine engine 20. This fluid cooled component 60 has a component wall 62 (e.g., a sidewall or an endwall) configured with one or more cooling apertures 64 such as effusion apertures.

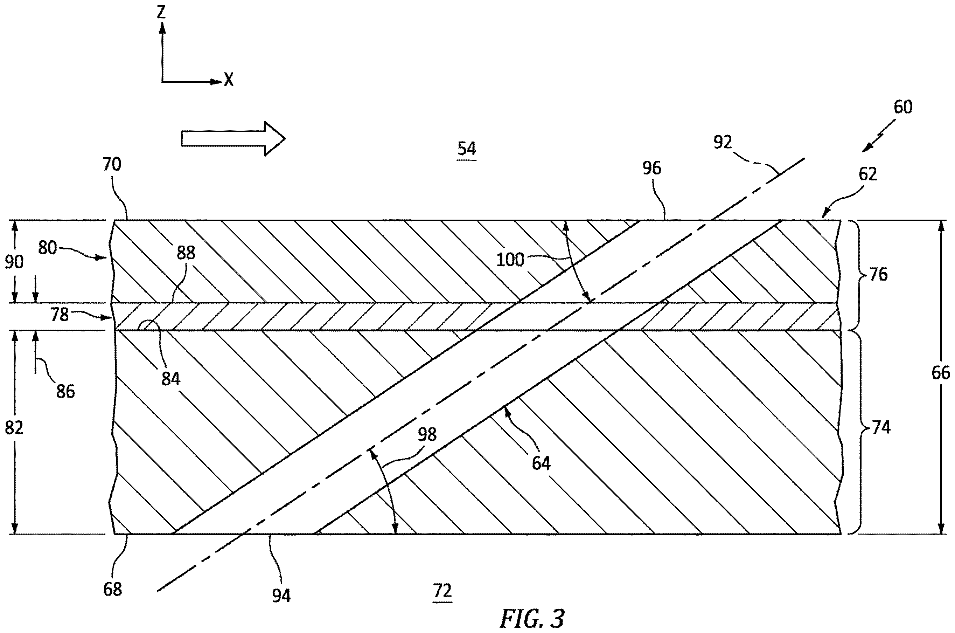

Referring to FIG. 3, the component wall 62 has a thickness 66 that extends vertically (e.g., along a z-axis) between and to a first surface 68 of the component wall 62 and a second surface 70 of the component wall 62. The component first surface 68 may be configured as an interior, a cold side and/or a back surface of the component wall 62. The component first surface 68, for example, may at least partially form a peripheral boundary of a cooling fluid volume 72 (e.g., a cavity or a passage) along the component wall 62. The component first surface 68 may thereby be subject to relatively cool fluid (e.g., cooling air) supplied to the cooling fluid volume 72. This cooling fluid volume 72 may be an internal volume formed within the fluid cooled component 60 where, for example, the component 60 is an airfoil. Alternatively, the cooling fluid volume 72 may be an external volume formed external to the fluid cooled component 60 where, for example, the component 60 is a flowpath wall. The component second surface 70 may be configured as an exterior, a hot side and/or a face surface of the fluid cooled component 60 and its component wall 62. The component second surface 70, for example, may at least partially form a peripheral boundary of a portion of, for example, the core flowpath 54 along the component wall 62. The component second surface 70 may thereby be subject to relative hot fluid (e.g., combustion products) flowing through the core flowpath 54 within, for example, one of the engine sections 30-32 of FIG. 1.

The component wall 62 of FIG. 3 includes a component substrate 74 and a coating system 76. The coating system 76 may include one or more external component coatings 78 and 80 over the component substrate 74.

The component substrate 74 at least partially or completely forms and carries the component first surface 68. The component substrate 74 has a thickness 82 that extends vertically (e.g., along the z-axis) between and to the component first surface 68 and a second surface 84 of the component substrate 74. The substrate second surface 84 may be configured as an exterior surface of the component substrate 74 prior to being (e.g., partially or completely) covered by the coating system 76 and its one or more component coatings 78 and 80. The substrate thickness 82 may be greater than one-half (1/2) of the wall thickness 66. The substrate thickness 82, for example, may be between two-third (2/3) and four-fifths (4/5) of the wall thickness 66. In other embodiments, however, it is contemplated the substrate thickness 82 may be greater than four-fifths (4/5) of the wall thickness 66 or less than one-half (1/2) of the wall thickness 66.

The component substrate 74 is constructed from substrate material. This substrate material may be an electrically conductive material. The substrate material, for example, may be or otherwise include metal. Examples of the metal include, but are not limited to, nickel (Ni), titanium (Ti), aluminum (Al), chromium (Cr), cobalt (Co), and alloys thereof. The metal, for example, may be a nickel or cobalt based superalloy such as, but not limited to, PWA 1484 or PWA 1429.

The inner coating 78 may be configured as a bond coating between the component substrate 74 and the outer coating 80. The inner coating 78 of FIG. 3 is bonded (e.g., directly) to the substrate second surface 84. The inner coating 78 at least partially or completely covers the substrate second surface 84 (e.g., along an x-y plane of FIG. 2). The inner coating 78 has a thickness 86 that extends vertically (e.g., along the z-axis) between and to the component substrate 74 and the outer coating 80. This inner coating thickness 86 may be less than one-seventh (1/7) of the wall thickness 66. The inner coating thickness 86, for example, may be between one-eighth (1/8) and one-fortieth (1/40) of the wall thickness 66.

The inner coating 78 is constructed from inner coating material. This inner coating material may be an electrically conductive material. The inner coating material, for example, may be or otherwise include metal. Examples of the metal include, but are not limited to, MCrAlY and MAlCrX, where "M" is nickel (Ni), cobalt (Co), iron (Fe) or any combination thereof, and where "Y" or "X" is hafnium (Hf), yttrium (Y), silicon (Si) or any combination thereof. The MCrAlY and MAlCrX may be further modified with strengthening elements such as, but not limited to, tantalum (Ta), rhenium (Re), tungsten (W), molybdenum (Mo) or any combination thereof. An example of the MCrAlY is PWA 286.

The inner coating 78 may be formed from a single layer of the inner coating material. The inner coating 78 may alternatively be formed from a plurality of layers of the inner coating material, where the inner coating material within each of those inner coating layers may be the same as one another or different from one another.

The outer coating 80 may be configured as a protective coating for the component substrate 74 and, more generally, the fluid cooled component 60. The outer coating 80, for example, may be configured as a thermal barrier layer and/or an environmental layer. The outer coating 80 at least partially or completely forms and carries the component second surface 70. The outer coating 80 of FIG. 3 is bonded (e.g., directly) to a second (e.g., exterior) surface 88 of the inner coating 78. The outer coating 80 at least partially or completely covers the inner coating second surface 88 as well as the underlying substrate second surface 84 (e.g., along the x-y plane of FIG. 2). The outer coating 80 has a thickness 90 that extends vertically (e.g., along the z-axis) between and to the inner coating 78 and the component second surface 70. This outer coating thickness 90 may be less than one-half (1/2) of the wall thickness 66. The outer coating thickness 90, for example, may be between one-third (1/3) and one-eighth (1/8) of the wall thickness 66. In other embodiments, however, it is contemplated the outer coating thickness 90 may be greater than one-half (1/2) of the wall thickness 66 or less than one-eighth (1/8) of the wall thickness 66.

The outer coating 80 is constructed from outer coating material. This outer coating material may be a non-electrically conductive material. The outer coating material, for example, may be or otherwise include ceramic. Examples of the ceramic include, but are not limited to, yttria stabilized zirconia (YSZ) and gadolinium zirconate (GdZ). The outer coating material of the present disclosure, however, is not limited to non-electrically conductive materials. In other embodiments, for example, the outer coating material may be an electrically conductive material; e.g., metal.

The outer coating 80 may be formed from a single layer of the outer coating material. The outer coating 80 may alternatively be formed from a plurality of layers of the outer coating material, where the outer coating material within each of those outer coating layers may be the same as one another or different from one another. For example, the outer coating 80 may include a thin interior layer of the YSZ and a thicker exterior later of the GdZ.

Each of the cooling apertures 64 extends along a longitudinal centerline 92 of the respective cooling aperture 64 between and to an inlet 94 into the respective cooling aperture 64 and an outlet 96 from the respective cooling aperture 64. This aperture centerline 92 may have a straight line geometry (e.g., in the x-y plane, in an x-z plane and/or in a y-z plane) from the cooling aperture inlet 94, through the component wall 62, to the cooling aperture outlet 96. The aperture centerline 92 of FIG. 3 is angularly offset from the component first surface 68 by a first angle 98, and the aperture centerline 92 is angularly offset from the component second surface 70 by a second angle 100. The first angle 98 of FIG. 3 may be equal to the second angle 100. The first angle 98 and the second angle 100 are each non-zero acute angles - greater than zero degrees (0°) and less than ninety degrees (90°). The first angle 98 and the second angle 100, for example, may each be between ten degrees (10°) and eighty degrees (80°); e.g., between twenty degrees (20°) and forty degrees (40°), or between forty degrees (40°) and sixty degrees (60°). Of course, in other embodiments, the first angle 98 and/or the second angle 100 may each be greater than eighty degrees (80°); e.g., a ninety degree (90°) right angle.

The cooling aperture inlet 94 of FIG. 3 is located in the component first surface 68. The cooling aperture inlet 94 thereby fluidly couples its respective cooling aperture 64 with the cooling fluid volume 72 along the component first surface 68. The cooling aperture inlet 94 has a cross-sectional geometry (e.g., shape and dimensions) when viewed in a reference plane parallel with the component first surface 68 at the respective cooling aperture inlet 94. This inlet geometry may have a curved shape; e.g., an oval shape, a circular shape, etc.

The cooling aperture outlet 96 of FIG. 3 is located in the component second surface 70. The cooling aperture outlet 96 thereby fluidly couples its respective cooling aperture 64 with the core flowpath 54 along the component second surface 70. The cooling aperture outlet 96 has a cross-sectional geometry (e.g., shape and dimensions) when viewed in a reference plane parallel with the component second surface 70 at the respective cooling aperture outlet 96. This outlet geometry may have a curved shape (e.g., an oval shape, a circular shape, or an amorphous curved shape), a polygonal shape (e.g., an elongated rectangular shape, a (e.g., equilateral) trapezoidal shape, or an amorphous polygonal shape), a combined curved-polygonal shape, or any other regular or irregular shape.

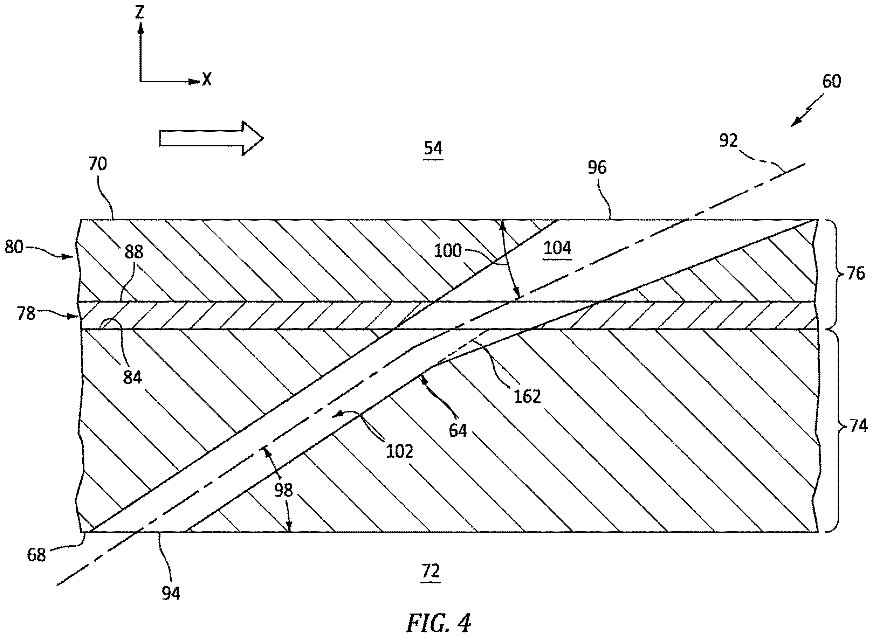

The outlet geometry may be exactly or substantially the same as the inlet geometry. For example, the shape of the cooling aperture outlet 96 may be exactly or substantially the same as the shape of the cooling aperture inlet 94. Dimensions (e.g., a width) of the cooling aperture outlet 96 may also be exactly or substantially equal to dimensions (e.g., a width) of the cooling aperture inlet 94. Alternatively, referring to FIG. 4, one or more of the cooling apertures 64 may each be configured with a metering section 102 at its cooling aperture inlet 94 and a diffuser section 104 at its cooling aperture outlet 96. Here, the dimensions of the cooling aperture outlet 96 are different (e.g., greater) than the dimensions of the cooling aperture inlet 94. The shape of the cooling aperture outlet 96 may also be different than the shape of the cooling aperture inlet 94. More particularly, the metering section 102 may have a uniform (e.g., constant) cross-sectional geometry as the respective cooling aperture 64 extends from its cooling aperture inlet 94 to its diffuser section 104. The diffuser section 104, by contrast, may have a cross-sectional geometry that changes (e.g., expands) as the respective cooling aperture 64 extends from its metering section 102 to its cooling aperture outlet 96. In addition, the aperture centerline 92 of FIG. 4 has a non-straight line (e.g., bent, curved, etc.) geometry, for example, at an intersection between the metering section 102 and the diffuser section 104. The first angle 98 of FIG. 4 is thereby different (e.g., greater) than the second angle 100. However, for ease of description, the cooling apertures 64 may be described below as shown in FIG. 3; e.g., without diffuser sections.

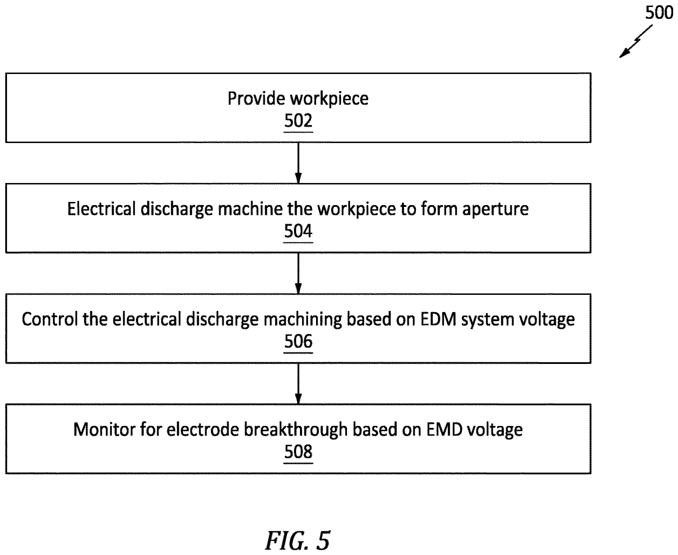

FIG. 5 is a flow diagram of a method 500 for manufacturing a component. For ease of description, the manufacturing method 500 is described below with reference to original manufacturing the fluid cooled component 60 of FIG. 3. The manufacturing method 500 of the present disclosure, however, is not limited to manufacturing such an exemplary fluid cooled component nor to manufacturing fluid cooled components in general. The manufacturing method 500, for example, may alternatively be performed to manufacture the fluid cooled component 60 of FIG. 4 or a component with various other machined features; e.g., cooling apertures or other through-holes, etc. Moreover, the manufacturing method 500 may also be performed for remanufacturing and/or otherwise repairing a previously originally manufactured component.

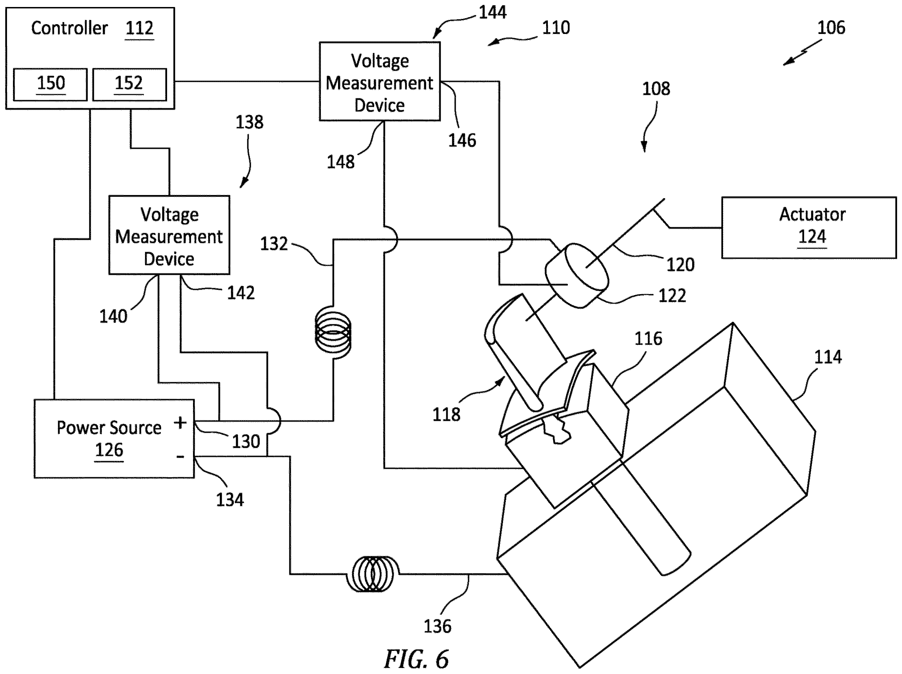

Referring to FIG. 6, the manufacturing method 500 may be performed using a manufacturing system 106. The manufacturing system 106 of FIG. 6 includes an electrical discharge machining (EDM) system 108, a monitoring system 110 and a controller 112. This manufacturing system 106 also includes a workpiece support 114 (e.g., a table, a bench, a platform, etc.) and a workpiece fixture 116 (e.g., a stand, a vice, etc.) configured to secure a workpiece 118 to the workpiece support 114 and/or locate the workpiece 118 with the workpiece support 114.

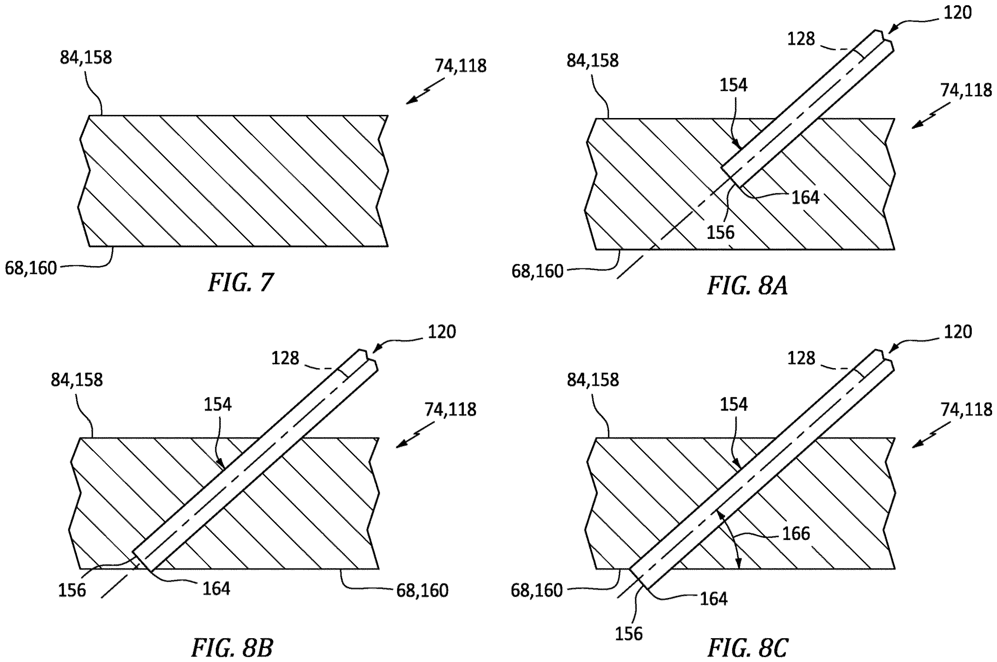

The EDM system 108 includes an electrical discharge machining (EDM) electrode 120, an electrode guide 122, an electrode actuator 124 (e.g., an electric servo motor) and an electrical power source 126 (e.g., a generator, a battery, an amplifier, the electrical grid, etc.). The electrode guide 122 is configured to support the EDM electrode 120 during electrical discharge machining. The electrode guide 122 is also electrically coupled to the EDM electrode 120. The electrode actuator 124 is configured to move (e.g., translate) the EDM electrode 120 through the electrode guide 122 and along a centerline 128 of the EDM electrode 120 (e.g., see FIGS. 8A-C), where the electrode guide 122 supports and guides the movement of the EDM electrode 120. A first terminal 130 (e.g., a positive terminal) of the power source 126 is electrically coupled to the electrode guide 122 through a first line 132 (e.g., a positive cable). A second terminal 134 (e.g., a negative terminal) of the power source 126 is electrically coupled to the workpiece support 114 through a second line 136 (e.g., a negative cable). With this arrangement, the power source 126 and its first terminal 130 are electrically coupled to the EDM electrode 120 sequentially through at least (or only) the first line 132 and the electrode guide 122. The power source 126 and its second terminal 134 are electrically coupled to the workpiece 118 sequentially through at least (or only) the second line 136, the workpiece support 114 and the workpiece fixture 116. The power source 126 may output an electrical current to the EDM electrode 120 with a pulse width equal to or less than twenty microseconds (e.g., between ten microseconds and twenty microseconds) during the electrical discharge machining.

The EDM system 108 of FIG. 6 also includes an electrical discharge machining (EDM) voltage measurement device 138 ("EDM measurement device"); e.g., a low frequency measurement device, a low speed oscilloscope, etc. A first terminal 140 (e.g., a positive terminal) of the EDM measurement device 138 is electrically coupled to the first line 132 (or the first terminal 130 of the power source 126). A second terminal 142 (e.g., a negative terminal) of the EDM measurement device 138 is electrically coupled to the second line 136 (or the second terminal 134 of the power source 126). With this arrangement, the EDM measurement device 138 is configured to measure an (e.g., overall) electrical discharge machining (EDM) system voltage between the first line 132 (or the first terminal 130 of the power source 126) and the second line 136 (or the second terminal 134 of the power source 126). This EDM system voltage is indicative of a gap voltage between the EDM electrode 120 and the workpiece 118 during the electrical discharge machining. The EDM measurement device 138 may be configured to measure the EDM system voltage at a (e.g., low frequency) measurement frequency equal to or less than five-hundred hertz (500 Hz); e.g., between two-hundred hertz (200 Hz) and three-hundred hertz (300 Hz), between three-hundred hertz (300 Hz) and four-hundred hertz (400 Hz), or between four-hundred hertz (400 Hz) and five-hundred hertz (500 Hz).

The EDM system 108 may be configured for high speed electrical discharge machining (HSEDM), hollow spindle electrical discharge machining (HSEDM), or sinker electrical discharge machining. The EDM system 108 may include a single EDM electrode 120, or multiple EDM electrodes 120 for forming multiple features (e.g., apertures) simultaneously as discussed below in further detail. The present disclosure, however, is not limited to such exemplary electrical discharge machining processes or electrode arrangements.

The monitoring system 110 includes a breakthrough monitoring voltage measurement device 144 ("breakthrough measurement device"); e.g., a high frequency measurement device, a high speed oscilloscope, etc. A first terminal 146 (e.g., a positive terminal) of the breakthrough measurement device 144 is electrically coupled to the electrode guide 122, for example independent of the first line 132. A second terminal 148 (e.g., a negative terminal) of the breakthrough measurement device 144 is electrically coupled to the workpiece fixture 116 (or the workpiece support 114), for example independent of the second line 136. With this arrangement, the breakthrough measurement device 144 is configured to measure an (e.g., focused) electrical discharge machining (EDM) voltage between the electrode guide 122 and the workpiece fixture 116 (or the electrode guide 122). This EDM voltage is also indicative of the gap voltage between the EDM electrode 120 and the workpiece 118 during the electrical discharge machining. However, whereas the EDM system voltage is also influenced by noise, resistance, etc. along the first line 132, the workpiece support 114 and the second line 136, the EDM voltage measured by the breakthrough measurement device 144 is closer to an actual value of the gap voltage. Moreover, the breakthrough measurement device 144 may be configured to measure the EDM voltage at a (e.g., high frequency) measurement frequency equal to or greater than ten kilohertz (10 kHz); e.g., between ten kilohertz (10 kHz) and fifteen kilohertz (15 kHz), between fifteen kilohertz (15 kHz) and twenty kilohertz (20 kHz), or between twenty kilohertz (20 kHz) and twenty-five kilohertz (25 kHz). Of course, it is contemplated the measurement frequency may be greater than twenty-five kilohertz (25 kHz).

The controller 112 is in signal communication with (e.g., hardwired and/or wirelessly coupled to) the EDM system 108 and the monitoring system 110. More particularly, the controller 112 is in signal communication with the electrode actuator 124, the power source 126, the EDM measurement device 138 and the breakthrough measurement device 144. The controller 112 may be implemented with a combination of hardware and software. The hardware may include a memory 150 and at least one processing device 152, which processing device 152 may include one or more single-core and/or multi-core processors. The hardware may also or alternatively include analog and/or digital circuitry other than that described above.

The memory 150 is configured to store software (e.g., program instructions) for execution by the processing device 152, which software execution may control and/or facilitate performance of the manufacturing method 500. The memory 150 may be a non-transitory computer readable medium. For example, the memory 150 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

In step 502, referring to FIG. 7, the workpiece 118 is provided. This workpiece 118 may be a preform of the component substrate 74 being manufactured. The workpiece 118, for example, may generally have the same configuration (e.g., construction, shape, size, etc.) as that of the component substrate 74. The workpiece 118 of FIG. 7, however, does not include any (or at least one or more) of the cooling apertures 64 which is/are to be formed during the manufacturing method 500. The present disclosure, however, is not limited to such an exemplary workpiece configuration. For example, the workpiece 118 may alternatively include the inner coating 78 or the entire coating system 76 as described below in further detail.

In step 504, referring to FIGS. 8A-C, the workpiece 118 is electrical discharge machined (EDM) to form an aperture 154 in the workpiece 118. The controller 112, for example, may signal the EDM system 108 and its electrode actuator 124 and its power source 126 to electrical discharge machine the workpiece 118 with the EDM electrode 120. During this electrical discharge machining, referring to FIG. 8A, a tip 156 of the EDM electrode 120 is plunged into the workpiece 118 through a face surface 158 of the workpiece 118; e.g., the substrate second surface 84. Referring to FIGS. 8B and 8C, the electrode actuator 124 may then continue to move (e.g., translate) the EDM electrode 120 along its electrode centerline 128 until, for example, the electrode tip 156 breaks through (e.g., pierces) a back surface 160 of the workpiece 118; e.g., the component first surface 68.

The aperture 154 formed during the electrical discharge machining step 504 may form at least a portion or an entirety of the respective cooling aperture 64 extending in the component substrate 74 of FIG. 3. The aperture 154 may alternatively form a portion (see dashed line 162) or an entirety of the respective cooling aperture 64 extending in the component substrate 74 of FIG. 4. For example, the aperture 154 may form an entirety of the metering section 102 and a portion (e.g., a preform) of the diffuser section 104 (e.g., to left of the dashed line 162) in the component substrate 74. In another example, the aperture 154 may form the entirety of the metering section 102 and an entirety of the diffuser section 104 extending in the component substrate 74 from the substrate second surface 84 to the metering section 102.

In step 506, one or more parameters of the electrical discharge machining of the workpiece 118 are controlled based on the EDM system voltage. The EDM measurement device 138 of FIG. 7, for example, measures the EDM system voltage during the electrical discharge machining of the workpiece 118. The EDM measurement device 138 provides an electrical discharge machining (EDM) system voltage signal indicative of the measured EDM system voltage to the controller 112. The controller 112 may use information from this EDM system voltage signal to control the electrical discharge machining of the workpiece 118. For example, based on the measured EDM system voltage, the control may signal the power source 126 to maintain or change the voltage and/or the current output to the EDM electrode 120. Based on the measured EDM system voltage, the controller 112 may also or alternatively signal the electrode actuator 124 to maintain or change forward movement of the EDM electrode 120, or even reverse EDM movement of the EDM electrode 120. Operation of the EDM system 108 may thereby be tuned based on the measured EDM system voltage. Note, the controller 112 uses the lower frequency EDM system voltage rather the higher frequency EDM voltage for controlling electrical discharge machining to reduce or prevent, for example, parameter oscillations.

In step 508, EDM electrode breakthrough is monitored for based on the EDM voltage. The breakthrough measurement device 144 of FIG. 6, for example, measures the EDM voltage during the electrical discharge machining of the workpiece 118. The breakthrough measurement device 144 provides an electrical discharge machining (EDM) voltage signal indicative of the measured EDM voltage to the controller 112. The controller 112 may use information from this EDM voltage signal to determine whether the EDM electrode 120 has broken through the workpiece 118 and its workpiece back surface 160. For example, as the EDM electrode 120 machines away material of the workpiece 118 between the workpiece face surface 158 and the workpiece back surface 160 (e.g., see FIG. 8A), the EDM voltage may remain substantially constant. However, as a corner 164 (e.g., a portion of an edge) of the EDM electrode 120 at the electrode tip 156 begins to break through the workpiece back surface 160 (e.g., see FIG. 8B), the EDM voltage may begin to change; e.g., rise. The change in the EDM voltage may continue to change until the entire electrode tip 156 breaks through the workpiece back surface 160 (e.g., see FIG. 8C). Therefore, by monitoring changes in the EDM voltage, the controller 112 may determine (e.g., detect) when the corner 164 of the EDM electrode 120 begins to break through the workpiece back surface 160 (e.g., see FIG. 8B) and/or when the entire electrode tip 156 has broken through the workpiece back surface 160 (e.g., see FIG. 8C). Here, the corner 164 of the EDM electrode 120 breaks through the workpiece back surface 160 before the entire electrode tip 156 since the EDM electrode 120 is angularly offset from the workpiece 118 and its surfaces 158 and 160 by an acute angle 166. The controller 112 may also determine (e.g., detect) when the EDM electrode 120 back strikes, for example, against another portion (e.g., an inner wall) of the workpiece 118 by monitoring the changes in the EDM voltage.

In some embodiments, the controller 112 may determine the EDM electrode 120 has broken through the workpiece 118 during the electrical discharge machining of the workpiece 118. The controller 112 may then signal the EDM system 108 to terminate (end) the electrical discharge machining. For example, the controller 112 may signal the power source 126 to depower and the controller 112 may signal the electrode actuator 124 to retract the EDM electrode 120 from the now (e.g., fully) formed aperture 154 in the workpiece 118. Thus, the monitoring for the EDM electrode 120 breakthrough may be integrated into the electrical discharge machining process.

In some embodiments, the controller 112 (or another controller) may determine the EDM electrode 120 has broken through the workpiece 118 after the electrical discharge machining of the workpiece 118. For example, the electrical discharge machining of the workpiece 118 may be terminated using other parameters such as, but not limited to, length of travel of the EDM electrode 120 into the workpiece 118. Following the termination of the electrical discharge machining process, the controller 112 may process information associated with the monitored EDM voltage to verify whether or not the EDM electrode 120 broke through the workpiece 118 to completely form the aperture 154. Where the controller 112 determines breakthrough has occurred, the controller 112 may advance the manufacturing method to form one or more additional apertures in the workpiece 118. Where the controller 112 determines breakthrough has not occurred, the controller 112 may signal / control the EDM system 108 to reform (e.g., redrill) the aperture 154. Alternatively, another method may be utilized to determine EDM electrode breakthrough, and the determination of EDM electrode breakthrough utilizing the monitored EDM voltage may be used as a backstop (e.g., a double check) for the other breakthrough determination method. For example, following the electrical discharge machining, flow through the aperture 154 may be tested by pumping a fluid (e.g., a liquid or a gas) through the aperture 154 (or multiple apertures). Where the fluid flow through the aperture 154 (or multiple apertures) is different than expected, the controller 112 may process the monitored EDM voltage for the aperture 154 (or monitored EDM voltages for multiple apertures) to double check findings of the fluid flow breakthrough determination method. Here, the fluid flow may be inspected visually (e.g., where the fluid is the liquid) and/or using a thermal image (e.g., where the fluid is hot air). The present disclosure, however, is not limited to the foregoing exemplary other breakthrough determination methods.

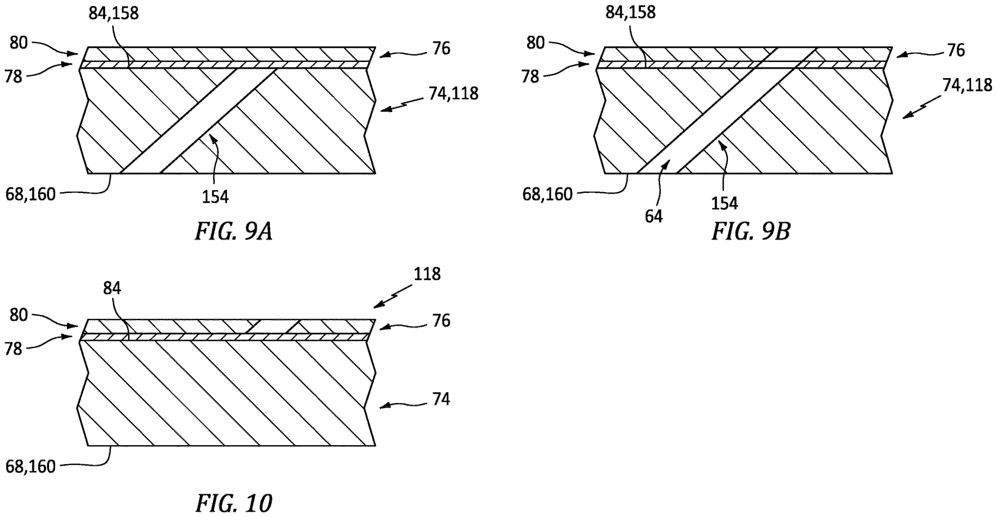

In some embodiments, referring to FIGS. 9A and 9B, the workpiece 118 may be coated with the coating system 76 following the formation of the aperture 154 (or multiple aperture). The coating system 76 may then be machined using one or more machining techniques to extend the aperture 154 (or multiple apertures) through the coating system 76; e.g., to finish formation of the cooling aperture 64 (or cooling apertures 64). Examples of the machining techniques include, but are not limited to, laser machining, electron beam machining, waterjet machining and the like. Alternatively, referring to FIG. 10, the workpiece 118 may alternatively include the coating system 76 prior to the electrical discharge machining of step 502. In such embodiments, non-conductive material (e.g., the outer coating 80) may be machined using one or more of the foregoing machining techniques. The electrical discharge machining of step 502 may then be performed to form the aperture 154 in the component substrate 74, for example, as described above.

In some embodiments, each aperture 154 in the workpiece 118 may be individually and separately formed. In other embodiments, multiple apertures may be formed in the workpiece 118 simultaneously. In such embodiments, the EDM voltage may be measured and monitored for each of the EDM electrodes 120. Alternatively, the EDM voltage may be measured and monitored collectively for all (or a subset) of the EDM electrodes 120.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A manufacturing method comprising:
electrical discharge machining a workpiece using an electrode (120) to form an aperture (64) in the workpiece (118);
measuring a first voltage indicative of a gap voltage between the electrode (120) and the workpiece (118) using a first measurement device (138) to provide a first measurement signal indicative of the first voltage;
controlling movement of the electrode (120) using the first measurement signal;
measuring a second voltage indicative of the gap voltage using a second measurement device (144) to provide a second measurement signal indicative of the second voltage; and
determining whether the electrode (120) has broken through the workpiece (118) using the second measurement signal.

2. The manufacturing method of claim 1, wherein the first voltage is measured using the first measurement device (138) at a measurement frequency equal to or less than five-hundred hertz.

3. The manufacturing method of claim 1 or 2, wherein:
the workpiece (118) is secured to a support (114) by a fixture (116);
a first line (132) electrically couples a power source (126) to the electrode (120);
a second line (136) electrically couples the power source (126) to the support (114); and
the first measurement device (138) is electrically coupled to the first line (132) and the second line (136), and the first voltage is measured between the first line (132) and the second line (136).

4. The manufacturing method of claim 1, 2 or 3, wherein the second voltage is measured using the second measurement device (144) at a measurement frequency equal to or greater than ten kilohertz.

5. The manufacturing method of any preceding claim, wherein the electrical discharge machining uses an electrical current with a pulse width equal to or less than twenty microseconds.

6. The manufacturing method of any preceding claim, wherein:
the workpiece (118) is secured to a or the support (114) by a or the fixture (116);
the electrode (120) is supported by a guide (122); and
the second measurement device (144) is electrically coupled to the fixture (116) and the guide (122), and the second voltage is measured between the fixture (116) and the guide (122).

7. The manufacturing method of claim 6, wherein:
a first line (132) electrically couples a power source (126) to the guide (122); and
a second line (136) electrically couples the power source (126) to the support (114).

8. The manufacturing method of any preceding claim, wherein:
the workpiece (118) extends between a face surface (158) and a back surface (160);
the electrical discharge machining comprises plunging the electrode (120) into the workpiece (118) through the face surface (158) towards the back surface (160); and
the electrode (120) is angularly offset from the back surface (160) by an acute angle (166).

9. The manufacturing method of claim 8, further comprising:
detecting an initial breakthrough of a corner (164) of the electrode (120) through the back surface (160) using the second measurement signal; and/or
detecting a complete breakthrough of a tip (156) of the electrode (120) through the back surface (160) using the second measurement signal.

10. The manufacturing method of any preceding claim, wherein:
the determining of whether the electrode (120) has broken through the workpiece (118) is performed during the electrical discharge machining and the electrical discharge machining is terminated when it is determined that the electrode (120) has broken through the workpiece (118); or
the determining of whether the electrode (120) has broken through the workpiece (118) is performed after the electrical discharge machining and the electrical discharge machining is repeated when it is determined that the electrode (120) did not break through the workpiece (118).

11. The manufacturing method of any preceding claim, further comprising comparing breakthrough information obtained using the second measurement signal to breakthrough information obtained using another breakthrough determination method.

12. The manufacturing method of any preceding claim, wherein the workpiece (118) comprises a turbine engine airfoil (60A,60B,60C,60D,60H).

13. The manufacturing method of any preceding claim, further comprising forming a component (60) of a turbine engine (20), the forming of the component (60) including the electrical discharge machining of the workpiece (118) to form the aperture (64), wherein a cooling hole in the component (60) comprises the aperture (64),
optionally wherein:
the cooling hole includes a metering section (102) and a diffuser section (104); and
the aperture (64) forms at least the metering section (102).

14. A manufacturing method, comprising:
electrical discharge machining a workpiece (118) using an electrode (120) to form an aperture (64) in the workpiece (118), the workpiece (118) extending between a face surface (158) and a back surface (160), and the electrical discharge machining comprising plunging the electrode (120) into the workpiece (118) through the face surface (158);
measuring an EDM voltage indicative of a gap voltage between the electrode (120) and the workpiece (118) using a high frequency measurement device (144) to provide an EDM voltage measurement signal indicative of the EDM voltage, wherein the EDM voltage is measured by the high frequency measurement device (144) at a measurement frequency equal to or greater than ten kilohertz; and
determining whether the electrode (120) has broken through the back surface (160) using the EDM voltage measurement signal,
optionally wherein:
the manufacturing method, further comprises:
measuring an EDM system voltage indicative of the gap voltage using a low frequency measurement device (138) to provide an EDM system voltage measurement signal indicative of the gap voltage, wherein the EDM system voltage is measured by the low frequency measurement device (138) at a measurement frequency equal to or less than five-hundred hertz; and
controlling movement of the electrode (120) using the EDM system measurement signal; and/or
the determining of whether the electrode (120) has broken through the back surface (160) is performed during the electrical discharge machining and the electrical discharge machining is terminated when it is determined that the electrode (120) has completely broken through the back surface (160).

15. The manufacturing method of claim 14, wherein;
the workpiece (118) is secured to a support (114) by a fixture (116);
the electrode (120) is supported by and electrically coupled to a guide (122); and
the high frequency measurement device (144) is electrically coupled to the guide (122) and the fixture (116).
